(19) Europäisches Patentamt
European Patent Office
Office européen des brevets

(11) Veröffentlichungsnummer: **0 056 850**
**B1**

(12) # EUROPÄISCHE PATENTSCHRIFT

(45) Veröffentlichungstag der Patentschrift: **20.06.84**

(21) Anmeldenummer: **81109498.6**

(22) Anmeldetag: **04.11.81**

(51) Int. Cl.³: **C 02 F 1/42,** B 01 J 47/00, B 01 J 47/04, B 01 J 49/00, B 01 D 15/04

(54) **Verfahren zur Teilentsalzung von Wässern mit einer Kombination von schwach saurem und basischem Ionenaustauschermaterial und anschliessender Regeneration des Ionenaustauschermaterials.**

(30) Priorität: **28.01.81 DE 3102693**

(43) Veröffentlichungstag der Anmeldung: **04.08.82 Patentblatt 82/31**

(45) Bekanntmachung des Hinweises auf die Patenterteilung: **20.06.84 Patentblatt 84/25**

(84) Benannte Vertragsstaaten: **AT BE CH DE FR GB LI NL**

(56) Entgegenhaltungen:
**AT - B - 240 291**
**DE - A - 1 901 043**
**DE - A - 2 847 435**
**DE - B - 1 259 840**

(73) Patentinhaber: **Kernforschungszentrum Karlsruhe GmbH, Weberstrasse 5, D-7500 Karlsruhe 1 (DE)**

(72) Erfinder: **Kiehling, Brigitte, Gerwigstrasse 13, D-7500 Karlsruhe (DE)**
Erfinder: **Höll, Wolfgang, Dr., Am Horbach 9, D-7505 Ettlingen (DE)**

**EP 0 056 850 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Teilentsalzung von Wässern mit einer Kombination von in wässrigen Suspensionen vorliegenden schwach sauren Kationenaustauschern in freier Säureform und basischen Anionenaustauschern in Hydrogenkarbonatform und anschliessender Regeneration des beladenen Ionenaustauschermaterials.

Als Folge des steigenden Wasserbedarfs müssen immer mehr Wasserversorgungen Grund- oder Oberflächenwasser verwenden, das zwar hygienisch einwandfrei ist, aber einen zu hohen Salzgehalt aufweist. Bei den gelösten Salzen handelt es sich vorwiegend um Calcium- und Magnesiumverbindungen, deren Konzentrationen in der Regel durch regionale geochemische Verhältnisse bestimmt werden. Der «Atlas zur Trinkwasserqualität der Bundesrepublik Deutschland» zeigt, dass harte Grundwässer (d.s. solche mit verhältnismässig hohen Konzentrationen an $Ca^{++}$ und/oder $Mg^{++}$) vermehrt in Süddeutschland auftreten. Vorkommen aus Kalk- und Dolomitschichten weisen höhere Karbonathärten auf, es gibt jedoch auch Gegenden, in denen das Grundwasser viel Sulfat enthält und der Gesamtsalzgehalt über 1000 mg/l liegt (z.B. in Mittelfranken). In Gebieten mit intensiver landwirtschaftlicher Nutzung und entsprechend starker Düngung enthält das Grundwasser vielfach Nitrationen in Konzentrationen bis zu 250 mg/l, was zu Gesundheitsschädigungen führen kann.

Zur Vermeidung gesundheitlicher Schäden schreibt die Trinkwasserverordnung der Bundesrepublik Deutschland vor, dass der Sulfatgehalt maximal 250 mg/l und der Nitratgehalt höchstens 90 mg/l betragen darf. Dieser letztere Grenzwert wird aufgrund einer EG-Richtlinie künftig auf 50 mg/l gesenkt, was zahlreiche Wasserwerke zu geeigneten Aufbereitungsmassnahmen zwingt.

Nach allgemeiner Ansicht sollte der Gesamtsalzgehalt des Trinkwassers 500 mg/l nicht übersteigen. Eine Begrenzung der Härte und des Neutralsalzgehaltes ist daher in vielen Fällen anzustreben, vor allem auch aus korrosionschemischer Sicht. Bei der Verwendung von hartem Wasser muss mit Korrosionserscheinungen in verzinkten Rohrleitungen gerechnet werden, die durch das Vorhandensein von Neutralsalzanionen in höheren Konzentrationen noch begünstigt werden. Ebenfalls aus Gründen des Korrosionsschutzes ist bei der Mischung von Wässern unterschiedlicher Herkunft eine Teilenthärtung mit Angleichung der Karbonathärten erforderlich.

Eine Teilentsalzung ist auch für die industrielle Wasserverwertung von Bedeutung. Kühlwasser muss in vielen Fällen teilenthärtet sein. In Industriebetrieben gelangen oft grosse Salzmengen in das Abwasser das wiederverwendet werden könnte, wenn es gelänge, den Salzgehalt billig und wirkungsvoll zu erniedrigen.

Schwach saure Kationenaustauscherharze enthalten Karboxylgruppen als funktionelle Bestandteile. Diese sind analog dem Dissoziationsverhalten schwacher (z.B. organischer) Säuren nur schwach dissoziiert. Derartige Austauscher haben daher nur einen begrenzten Arbeitsbereich (pH > 4 bis 14) und sind nur in der Lage, Salze schwacher Säuren zu spalten (z.B. der Kohlensäure). In der Wasseraufbereitung werden schwach saure Harze zumeist zur Entkarbonisierung eingesetzt, d.h. zur Entfernung einer der Hydrogenkarbonatkonzentration äquivalenten Kationenmenge. Infolge der Selektivität von Austauscherharzen für mehrwertige Kationen nimmt ein solcher Austauscher vorwiegend Calcium- und Magnesiumionen auf.

Während der Regeneration müssen diese aufgenommenen Kationen wieder durch Wasserstoffionen verdrängt werden. Üblicherweise werden dazu Salzsäure oder Schwefelsäure (in einer Konzentration, die einen Gipsausfall vermeidet) verwendet.

Schwach saure Austauscher besitzen eine ausgeprägt starke Affinität zu $H^+$-Ionen, so dass die Säure (im Gegensatz zur Regeneration stark saurer Harze) weder besonders rein noch besonders konzentriert sein muss. Die Austauscher lassen sich daher auch mit schwachen Säuren regenerieren. Die Verwendung von Kohlensäure als Regeneriermittel wurde erstmals 1953 von GRAY und CROSBY (USA 2 656 245) vorgeschlagen.

KUNIN und VASSILIOU (Industrial and Engen. Chem., Product Research and Development, Vol. 2 (1963), No. 1, S. 1–3) beschreiben den Einsatz von $CO_2$ zur Regeneration Natrium-beladener Austauscherharze unter Drücken bis 300 p.s.i. Die Regenerationswirkung muss allerdings durch Ableiten der (alkalischen) $NaHCO_3$-Lösung unterstützt werden. Ein ähnlicher Weg ist in US-A 3 691 109 beschrieben, wo die ablaufende Lösung für die Regeneration von Anionenaustauschern nachaufbereitet wird.

BERGER-WITTMAR und SONTHEIMER (Vom Wasser 50 (1976), 297–329) beschreiben die Wirksamkeit der Regeneration $Ca^{2+}$–, $Mg^{2+}$–, $Na^+$– und $K^+$-beladener Harze. Dabei zeigte sich, dass die zweiwertigen Calcium- und Magnesiumionen sehr viel fester an den Austauscher gebunden sind als einwertige Kationen. Um einen einigermassen befriedigenden Wirkungsgrad zu erreichen, sind höhere $CO_2$-Drücke erforderlich. Schwierigkeiten bereitet auch der Ausfall von Calciumkarbonat. Ein auf diese Arbeit aufbauendes Verfahren ist in DE-A 27 14 297 beschrieben. In diesem Verfahren wird das Austauscherharz in einem Wirbelbett unter erhöhtem Druck regeneriert. Um für das ausfallende $CaCO_3$ Kristallisationskeime zu haben, wird von Anfang an pulverförmiges $CaCO_3$ zugegeben. Dieser Zusatz vermindert aber die Wirksamkeit der Regeneration, da dadurch der pH-Wert soweit erhöht wird, dass nur wenig nutzbare Kapazität erzeugt werden kann.

Anionenaustauscher lassen sich mit Hilfe von $CO_2$ partiell in die mit Hydrogenkarbonationen beladene Form überführen. Diese Überführung gelingt aber nur dann gut, wenn die Lösung einen pH-Wert besitzt, bei dem die durch das Einleiten

von $CO_2$ entstandenen Hydrogenkarbonationen eine ausreichende Konzentration besitzen. Allein mit $CO_2$ wird nur eine minimale Wirkung erzeugt. In dem Verfahren nach der DE-A 28 51 135 wurde diese Schwierigkeit dadurch behoben, dass eine feste Calciumverbindung zugesetzt wurde, die für einen günstigen pH-Wert sorgt. Die Zugabe einer solchen Verbindung (z.B. als $CaCO_3$) hat jedoch verfahrenstechnische Nachteile.

Zum Stande der Technik zur Teilentsalzung sind folgende Verfahren zu rechnen:

a) Die Teilentsalzung mit Entkarbonisierung mit schwach sauren Ionenaustauschern. Die Austauscher werden in der freien Säureform eingesetzt und entfernen die der Hydrogenkarbonatkonzentration des Wassers äquivalente Menge an zweiwertigen Metallkationen. Die Karbonathärte wird in ausgasbare Kohlensäure umgesetzt, während Sulfate, Nitrate und Chloride unbeeinflusst bleiben. (Dorfner: Ionenaustauscher, 3. Aufl., Verl. De Gruyter, Berlin, 1970).

b) Die Vollentsalzung eines Teilstroms mit Hilfe von stark sauren Kationenaustauschern in $H^+$-Form und stark basischen Anionenaustauschern in $OH^-$-Form und anschliessendem Verschnitt mit dem unbehandelten Wasser. Die Kationenaustauscher werden mit Salz- oder Schwefelsäure regeneriert, die Anionenaustauscher mit Natronlauge (siehe Dorfner). Beide Austauscher können auch in Form eines Mischbettes vorliegen.

c) Das DESAL-Verfahren. Hier wird ein schwach basisches Harz in $HCO_3$-Form benutzt, um Neutralsalze zunächst in Hydrogenkarbonate umzuwandeln. In einem nachgeschalteten Filter entfernt dann ein schwach saurer Kationenaustauscher alle Kationen, die entstehende Kohlensäure wird als $CO_2$ ausgegast. (s. Dorfner).

Dieses Verfahren weist folgende Nachteile auf:

Ein schwach basisches Harz in Bikarbonatform wandelt die Neutralsalze (vorzugsweise NaCl) in Bikarbonate um. Der nachgeschaltete schwach saure Austauscher, der nur Salze schwacher Säuren (z.B. der Kohlensäure) spalten kann, entfernt anschliessend eine der Bikarbonatkonzentration äquivalente Kationenmenge. Die Elimination von Neutralsalzanionen und -kationen ist also stöchiometrisch gekoppelt.

Zur Regeneration wird das schwach basische Harz zunächst mit $NH_3$ in die freie Basenform überführt und dann mit $CO_2$ in die Bikarbonatform gebracht. Der schwach saure Austauscher wird mit Schwefelsäure regeneriert.

US-A 3 691 109 (Erfinder: A.L. Larsen; Anm.: Marathon Oil Comp.):

Auch hier werden die Neutralsalze an einem schwach basischen Harz in $HCO_3^-$-Form in Bikarbonate umgewandelt. In einer anschliessenden Fällungsstufe werden die zweiwertigen Calcium- und Magnesiumionen mit CaO als $CaCO_3$ bzw. $Mg(OH)_2$ ausgefällt. Der nachgeschaltete schwach saure Austauscher in der freien Säureform entfernt dann die verbleibenden einwertigen Kationen (vorwiegend $Na^+$). Bedingt durch die zwischengeschaltete Kalkfällung läuft der eigentliche Ionenaustausch nicht stöchiometrisch gekoppelt ab.

In der Regeneration wird $CO_2$-haltiges Produktwasser zunächst über den Kationenaustauscher geleitet, von dem die Natriumionen teilweise verdrängt werden. Die ablaufende $NaHCO_3$-Lösung wird zusammen mit dem restlichen gelösten $CO_2$ dazu benutzt, um den Anionenaustauscher wieder in die $HCO_3^-$-Form zu bringen.

Dieses Verfahren beschränkt sich ausschliesslich auf den Fall Na-beladener Kationenaustauscher. Bei der Regeneration Ca-beladener Kationenaustauscher (was das Verfahren nach dem US-Patent ausdrücklich ausschliesst) würden für die Regeneration des Anionenaustauschers keine geeigneten chemischen Bedingungen (pH-Wert ist zu niedrig) entstehen.

d) Das SIROTHERM-Verfahren. Diese Verfahren benutzt Austauscher die sowohl schwach saure als auch schwach basische Gruppen enthalten. In der Entsalzungsphase liegen beide funktionellen Bestandteile in der freien Säure- bzw. Basenform vor.

Die Entsalzung ist daher ebenfalls stöchiometrisch gekoppelt bezüglich der Entfernung der Neutralsalzionen (vorzugsweise eingesetzt zur NaCl-Entfernung aus Brackwasser).

Die Regeneration erfolgt mit heissem Rohwasser, wobei der höhere Dissoziationsgrad von $H_2O$-Molekülen zur Bereitstellung der $H^+$- und $OH^-$-Ionen ausgenutzt wird.

Die letzten drei Verfahren (DESAL-Verfahren, Larsen-Verfahren und SIROTHERM-Verfahren) sind vorgesehen zur Elimination von Kochsalz, d.h. allgemein von 1-1-wertigen Salzen. Ziel ist jeweils eine weitgehende Entsalzung des Rohwassers bis auf geringe Restkonzentrationen. Das Auftreten von zweiwertigen Ionen ($Ca^{++}$, $SO_2^{--}$) erschwert beim SIROTHERM und LARSEN-Verfahren die Regeneration ausserordentlich und das angestrebte Ziel lässt sich nicht mehr erreichen. Beim DESAL-Prozess wird die Regeneration mit anderen Chemikalien durchgeführt, so dass diese Schwierigkeit umgangen wird.

Alle drei Verfahren benutzen als Anionenaustauscher ein schwach basisches Harz. Dieses kann Anionen nur aus sauren bis neutralen Lösungen austauschen. Alkalische Wässer überführen die funktionellen Gruppen in die freie Basenform, in der sie keine Anionen mehr aufnehmen können. Grundwasser ist zumeist leicht alkalisch ($pH \approx 7–8,5$), so dass diese Verfahren dort auch aus diesem Grund nicht angewandt werden können.

Der Erfindung liegt daher die Aufgabe zugrunde, ein Verfahren

a) zur Teilentsalzung von Wässern mit erhöhten Gehalten an Neutralsalzen unter Verwendung von Ionenaustauschermaterial und

b) zur anschliessenden Regeneration des Ionenaustauschermaterials zu schaffen, das die Schwierigkeiten der bekannten Verfahren vermeidet und gleichzeitig einerseits bei der Teilentsalzung erwirkt, dass die geforderten bzw. gewünschten Grenzwerte der Salzkonzentrationen für Trinkwasser mit Sicherheit unterschritten werden und andererseits bei der Regeneration des für die Teilentsalzung gebrauchten Ionenaustauschermaterials sicherstellt, dass auf einfache Weise mit geringstmöglichem Aufwand ein ausreichender Kapazitätsrückgewinn sowohl für schwach saure Kationenaustauscher als auch für basische Anionenaustauscher in einer wirtschaftlich vertretbaren Regenerationszeitdauer erzielt wird.

Das Verfahren soll auch zur Teilentsalzung von Grundwasser mit leicht alkalischem pH-Wert herangezogen werden können.

Die Aufgabe wird in überraschend einfacher Weise erfindungsgemäss dadurch gelöst, dass

a) die Teilentsalzung mit einer Kombination oder Mischung von schwach sauren Kationenaustauschern und stark basischen Anionenaustauschern von einem $p_K < 5$ durchgeführt wird,

b) je nach dem Kombinations- bzw. Mischungsverhältnis der beiden Austauscher gemäss a) nicht-äquivalente Mengen von Neutralsalz-Kationen und -Anionen aus den Wässern entfernt werden,

c) die Regeneration beider Austauscher gemeinsam ausschliesslich mit Hilfe von $CO_2$ mit einem Partialdruck über 0,1 bar durchgeführt wird.

Das Mengenverhältnis von Anionenaustauscher zu Kationenaustauscher liegt vorteilhafterweise zwischen 10:1 und 1:10, bezogen auf Austauschäquivalente, vorzugsweise bei 1:1.

Kationenaustauscher und Anionenaustauscher können sich in einem Mischbett, aber auch in zwei verschiedenen Filtern befinden, die aufeinanderfolgend vom Regeneriermittel durchströmt werden.

Ablauf der Verfahrensschritte (Austauschvorgänge):

Das erfindungsgemässe Verfahren beruht auf dem Einsatz eines schwach sauren Austauschers in der freien Säureform und eines Anionenaustauschers ($p_K < 5$) in der $HCO_3^-$-Form. Bei der Elimination z.B. von $CaSO_4$ laufen folgende Austausch-Vorgänge ab:

$$\begin{matrix} 2\,\overline{R_K\text{–}COOH} + Ca^{2+} \\ 2\,\overline{R_A\text{–}HCO_3^-} + SO_4^{2-} \end{matrix} \underset{\text{Regeneration}}{\overset{\text{Entsalzung}}{\rightleftharpoons}} \begin{matrix} \overline{(R_K\text{–}COO^-)_2Ca^{2+}} \\ \overline{(R_A)_2\text{–}SO_4^{2-}} \end{matrix} + 2CO_2 + 2H_2O \quad (1)$$

Anionen- und Kationenaustausche sind jedoch stöchiometrisch nicht gekoppelt. Bei Überschüssen an nutzbarer Kationenaustauschkapazität läuft zusätzlich noch eine «normale» Entkarbonisierung ab:

$$2\,\overline{R_K\text{–}COOH} + Ca^{2+} + 2HCO_3^- \rightarrow \overline{(R_K\text{–}COO^-)_2Ca^{2+}} + 2CO_2 + 2H_2O \quad (2)$$

Bei überschüssiger Anionenaustauschkapazität werden entsprechend zusätzlich zu (1) noch $SO_4^{2-}$-Ionen entfernt:

$$2\,\overline{R_A\text{–}HCO_3^-} + SO_4^{2-} \rightarrow \overline{(R_A)_2\text{–}SO_4^{2-}} + 2HCO_3^- \quad (3)$$

In der Entsalzungsphase läuft die Reaktion von links nach rechts, d.h. die Austauscher wandeln Neutralsalz in Kohlensäure um. In der Regenerationsphase wird Kohlendioxid in das System eingeleitet, so dass die Reaktion von rechts nach links abläuft. Dabei geben die Austauscher $Ca^{2+}$ und $SO_4^{2-}$ ab und nehmen $H^+$- und $HCO_3^-$-Ionen auf.

Wenn ein mit Chlorid- oder Sulfationen beladenes Anionenaustauscherharz mit Kohlensäure versetzt wird, so entsteht in kleinen Konzentrationen Salz- bzw. Schwefelsäure. Damit lassen sich pH-Werte erreichen, die unter dem pH-Wert der entsprechenden gesättigten $CO_2$-Lösung ohne Anionenaustauscherharz liegen (z.B. pH = 3,92 bei 1 bar $CO_2$-Partialdruck). In Versuchen wurden pH-Werte zwischen 2,7 und 3,3 erreicht.

Derartige Lösungen sind zur Regeneration schwach saurer Kationenaustauscher in $Ca^{2+}$- oder $Mg^{2+}$-Form geeignet. Die Regeneration der (z.B. zur Entkarbonisierung eingesetzten) schwach sauren Austauscher lässt sich also dadurch verbessern, dass gleichzeitig Anionenaustauscherharz im Regenerationssystem vorhanden ist.

In dem erfindungsgemässen Verfahren läuft die Regeneration so ab, dass die Kohlensäure zunächst mit dem Anionenaustauscher unter Bildung von Mineralsäure reagiert, die dann den Kationenaustauscher zusammen mit der Kohlensäure regeneriert.

$$\overline{(R_A^+)_2SO_4^{--}} + 2H_2O + 2CO_2 \rightarrow \overline{(R_A^+HCO_3^-)_2} + H_2SO_4 \quad (4)$$

$$\overline{(R_K\text{–}CO\bar{O})_2Ca^{2+}} + H_2SO_4 \rightarrow \overline{2R_KCOOH} + CaSO_4 \quad (5)$$

$$\overline{(R_K\text{–}CO\bar{O})_2Ca^{2+}} + 2H_2O + 2CO_2 \rightarrow \overline{2R_K\text{–}COOH} + Ca(HCO_3)_2 \quad (6)$$

Beträgt in einem Verfahren nach DE-A 27 14 297 der $CO_2$-Partialdruck 1 bar, so hat die Lösung einen pH-Wert von etwa 6. Entsprechend der von HÖLL und SONTHEIMER (Chem. Eng. Sci. 32 (1977), S. 755–762) beschriebenen Gleichgewichtslage lassen sich damit nur 5–10% nutzbare Kapazität erzielen. Der Zeitbedarf zum Erreichen des Regenerationsgleichgewichts ist infolge der geringen $H^+$-Konzentration gross und liegt bei 10–24 h (Diss. HÖLL, Uni Karlsruhe, 1976).

Infolge der mit dem Entstehen der Mineralsäure verbundenen pH-Wertabsenkung wird der Kationenaustauscher wirkungsvoll regeneriert. Die gegenüber DE-A 27 14 297 höhere Wasserstoffionenkonzentration verbessert die Lage des Austauschgleichgewichts erheblich und sorgt für eine wesentlich schnellere Einstellung dieses Gleichgewichts. Die Anreicherung der Lösung mit Calciumionen bewirkt zwar eine gewisse Erhöhung des pH-Werts, der jedoch stets unter dem Wert der DE-A 27 14 297 liegt.

Bei 1 bar $CO_2$-Partialdruck wurde beispielsweise ein pH von 4,5 gemessen in Abhängigkeit vom Verhältnis Kationenaustauscher zu Anionenaustauscher und auch vom Verhältnis zum Wasservolumen. Es wurde jedoch in jedem Falle ein niedrigerer pH-Wert festgestellt als bei den vergleichbaren Versuchen ohne Zusatz von Anionenaustauscher.

Unter diesen Bedingungen lässt sich ein schwach saures Harz zu 30–50% regenerieren. Der Zeitbedarf liegt bei 1–3 Stunden.

Das Anionenaustauscherharz steht zu Beginn der Regeneration in Kontakt mit einer Lösung von niedrigem pH-Wert, so dass die Regenerationswirkung zunächst gering ist. Im Verlaufe der gemeinsamen Regeneration erhöht sich jedoch die Calciumkonzentration, so dass der pH-Wert steigt. Da damit auch automatisch die $HCO_3$-Konzentration steigt, verbessert sich die Regenerationswirkung beim Anionenaustauscher mit fortschreitender Regeneration des Kationenaustauschers.

Da bei der Regeneration keine Kristallisationskeime zur Ausfällung von $CaCO_3$ oder $CaSO_4$ zugesetzt werden, ist zu erwarten, dass eine relativ starke Übersättigung der Regenerationslösung mit Calcium auftritt. Da nach den Gesetzen des Kalk-Kohlensäure-Gleichgewichts dann auch ein pH-Wert vorliegt, der über dem bei $CaCO_3$-Ausfall liegt, ist der Anteil der $HCO_3^-$-Ionen an dem gelösten $CO_2$ entsprechend höher, so dass die Regeneration des Anionenaustauschers vorteilhaft beeinflusst wird.

Beide Austauscherarten sind getrennt mit $CO_2$ nur schlecht regenerierbar, bei gemeinsamer Regeneration schafft jedoch jeder Typ für den anderen optimale Regenerationsbedingungen.

Verlauf der Regeneration eines Austauschergemischs:

Aus den bei Untersuchungen der Regenerationswirksamkeit aufgenommenen Kurvenverläufen ergibt sich, dass die Regeneration des Kationenaustauschers umso besser gelingt, je mehr Anionenaustauscher zugesetzt wird (siehe Figur 1a; $c_{K/A}$ = jeweiliges Verhältnis der eingesetzten Austauschermengen in Austauschäquivalenten).

Umgekehrt wird der Anionenaustauscher umso wirkungsvoller in der $HCO_3^-$-Form überführt, je mehr Kationenaustauscher vorhanden ist (siehe Figur 1b).

Daraus ergeben sich folgende Konsequenzen:

Die Elimination von Kationen und/oder Anionen gelingt umso besser, je geringer die Restbeladung des jeweiligen Austauschers ist. Daher kann durch Wahl bestimmter Harzmengenverhältnisse erreicht werden, dass entweder die Kationen- oder die Anionenelimination überwiegt. Die stöchiometrische Entfernung bildet daher einen Sonderfall.

Wird die beschriebene Austauschermischung wieder mit Wasser versetzt, das z.B. $CaSO_4$ enthält, so entfernt der Kationenaustauscher Calcium und der Anionenaustauscher $SO_4$ im Austausch gegen Kohlensäure, die in $CO_2$-Gas und Wasser zerfällt. Das Verfahren erlaubt somit insgesamt eine wirkungsvolle Teilentsalzung allein unter Einsatz von Kohlensäure als Regenerationsmittel.

Die Erfindung wird im folgenden anhand von zwei Ausführungsbeispielen und 4 Figuren näher erläutert. Die Erfindung ist jedoch nicht auf diese Beispiele beschränkt.

Beispiel 1

Mit dem gleichen, beladenen, schwach sauren Kationenaustauscherharz wurden zwei vergleichbare Regenerationen durchgeführt, einmal nach dem Verfahren gemäss der DE-A 27 14 297 (a) und zum anderen nach dem vorliegenden erfindungsgemässen Verfahren (b).

a) Es wurden 2 g eines schwach sauren Kationenaustauschers mit 2,5 Liter Wasser, durch das $CO_2$ mit einem Partialdruck von 1 bar hindurchgeleitet wurde, und einem Zusatz von 5 g $CaCO_3$ eine Stunde regeneriert. Das Ergebnis wurde in der nachfolgenden Figur 2 als Umsatz-Zeit-Kurve «a» eingetragen.

Diese Kurve verläuft sehr flach und die $Ca^{2+}$-Beladung nimmt nur entsprechend langsam ab.

b) 2 g eines schwach sauren Kationenaustauschers und 6 g eines mit Chlorid- und Sulfationen beladenen Anionenaustauschers wurden mit 5 Liter Wasser, durch das $CO_2$ mit einem Partialdruck von 1 bar hindurchgeleitet wurde und somit an $CO_2$ gesättigt war, eine Stunde lang regeneriert. Die Werte für die Wirksamkeit des erfindungsgemässen Verfahrens wurden in Figur 2 als Umsatz-Zeit-Kurve «b» eingetragen. Die nutzbare Kapazität in Prozent der Totalkapazität, in der Figur mit [%] bezeichnet, des schwach sauren Kationenaustauschers betrug nach 60 Minuten über 30%.

Während beim Verfahren nach der DE-A 27 14 297 der pH-Wert während der Regeneration konstant etwa bei 6 blieb, lag der pH-Wert im erfindungsgemässen Verfahren zwischen 3,4 und 4. Die gemessenen pH-Werte während der Regeneration nach dem erfindungsgemässen Verfahren wurden als Zeit-pH-Kurve (Kurve c) in die Figur 2 eingetragen. Die Figur 2 zeigt anschaulich die Überlegenheit des erfindungsgemässen Verfahrens über den Stand der Technik. Weitere Verbesserungen der nutzbaren Kapazität nach der Regeneration eines schwach sauren Kationenaustauschers können bei einer jeweiligen Optimierung des erfindungsgemässen Verfahrens erhalten werden.

Beispiel 2

Es wird die Anwendung des erfindungsgemässen Verfahrens bei der Entsalzung eines Trinkwassers gezeigt.

Versuchsbedingungen:

| | |
|---|---|
| Kationenaustauscher: | 1 1 |
| Anionenaustauscher: | 3 1 |
| (Verhältnis der Austauschäquivalente ca. 1:1) | |
| Rohwasser: | |
| Gesamthärte (Ca + Mg): | 9,74 mmol/l |
| Sulfatkonzentration: | 0,93 mmol/l |
| Regenerationsbedingungen: | |
| $CO_2$-Partialdruck: | 2 bar |
| Wassermenge: | 15,2 l (in 3 Stufen) |

Der Verlauf der Regeneration ist in Figur 3 dargestellt. Er zeigt, dass Gesamthärte und auch Sulfat hohe Konzentrationen erreichen, die weit über den jeweiligen Sättigungswerten liegen. Daraus folgt, dass Ausfällungen von $CaCO_4$ und $CaCO_3$ vorteilhaft zur Verminderung des Salzgehaltes im abzugebenden Regenerierwasser ausgenutzt werden können.

Figur 4 zeigt Gesamthärte und Sulfatkonzentration bei dem anschliessenden Einsatz dieses Filters zur Entsalzung des Rohwassers. Die Kurvenverläufe verdeutlichen, dass die Gesamthärte anfänglich um 30–40% vermindert wird (siehe Abstand der Kurven 7 und 9 voneinander). Ausserdem wird die Sulfatkonzentration auf weniger als die Hälfte reduziert (siehe Abstand zwischen den Kurven 8 und 10). Bis zum vollständigen Durchbruch der Gesamthärte können mehr als 800 Bettvolumina Kationenaustauscher durchgesetzt werden, der vollständige Sulfatdurchbruch ist nach 230 Bettvolumina Anionenaustauscher erreicht.

Die Versuchsergebnisse zeigen darüberhinaus, dass die Regeneration der beiden Austauscherharze nicht stöchiometrisch gekoppelt abläuft. Der Kationenaustauscher gibt mehr Äquivalente an Gesamthärte ab als der Anionenaustauscher an Sulfat. Entsprechendes gilt für die Entsalzungsphase. Hier entfernt der Kationenaustauscher mehr Äquivalente an Gesamthärte als der Anionenaustauscher an Sulfationen, so dass auch hier keine stöchiometrische Kopplung vorliegt, wie es nach Gleichung (1) vermutet werden könnte. Es ist daher zu erwarten, dass bei entsprechender Wahl des Mischungsverhältnisses wahlweise mehr Entkarbonisierung oder mehr Anionenentfernung erreicht werden kann.

Legende zu den Figuren 3 und 4

Figur 3:

Kurven 1, 2, 3: Zunahme der Konzentrationen von Magnesium und Calcium (Gesamthärte) in der ersten (2 Stunden dauernden), zweiten (1 Stunde dauernden), bzw. dritten (1/2 Stunde dauernden) Regenerationsstufe

Kurven 4, 5, 6: Zunahme der Sulfatkonzentrationen in der ersten, zweiten bzw. dritten Regenerationsstufe (die jeweiligen Regenerationszeiten entsprechen denen der Kurven 1, 2 und 3)

Figur 4:

Kurve 7: Ablaufkonzentration von Magnesium und Calcium (Gesamthärte) während der Entsalzungsphase

Kurve 8: Ablaufkonzentration von Sulfat während der Entsalzungsphase

## Patentansprüche

1. Verfahren zur Teilentsalzung von Wässern mit einer Kombination von in wässrigen Suspensionen vorliegenden schwach sauren Kationenaustauschern in freier Säureform und basischen Anionenaustauschern in Hydrogenkarbonatform und anschliessender Regeneration des beladenen Ionenaustauschermaterials, dadurch gekennzeichnet, dass

a) die Teilentsalzung mit einer Kombination oder Mischung von schwach sauren Kationenaustauschern und stark basischen Anionenaustauschern von einem $p_K < 5$ durchgeführt wird,

b) je nach dem Kombinations- bzw. Mischungsverhältnis der beiden Austauscher gemäss a) nicht-äquivalente Mengen von Neutralsalz-Kationen und -Anionen aus den Wässern entfernt werden,

c) die Regeneration beider Austauscher gemeinsam ausschliesslich mit Hilfe von $CO_2$ mit einem Partialdruck über 0,1 bar durchgeführt wird.

2. Verfahren nach Anspruch 1, dadurch gekennzeichnet, dass das Mengenverhältnis von Anionenaustauscher zu Kationenaustauscher zwischen 10:1 und 1:10, bezogen auf Austauschäquivalente, liegt.

3. Verfahren nach Anspruch 1, dadurch gekennzeichnet, dass sich Kationenaustauscher und Anionenaustauscher in einem Mischbett befinden.

4. Verfahren nach Anspruch 1, dadurch gekennzeichnet, dass sich Anionenaustauscher und Kationenaustauscher in zwei verschiedenen Filtern befinden, die aufeinanderfolgend vom Regeneriermittel durchströmt werden.

## Revendications

1. Procédé pour dessaler partiellement des eaux avec une combinaison d'échangeurs de cations faiblement acides sous forme d'acides libres et d'échangeurs d'anions basiques sous forme de carbonate d'hydrogène, mis en suspensions aqueuses, et ensuite pour la régénération du matériau échangeur d'ions ainsi chargé, procédé caractérisé en ce que:

a) le dessalement partiel est effectué avec une combinaison ou bien un mélange d'échangeurs de cations faiblement acides et d'échangeurs d'anions fortement basiques, d' un $p_K$ 5,

b) selon le rapport de combinaison ou bien de

mélange des deux échangeurs selon a), des quantités non équivalentes de cations et d'anions de sels neutres sont éliminées des eaux,

c) la régénération des deux échangeurs est effectuée en commun exclusivement à l'aide de $CO_2$ avec une pression partielle supérieure à 0,1 bar.

2. Procédé selon revendication 1, caractérisé en ce que le rapport quantitatif de l'échangeur d'anions et l'échangeur de cations, se situe entre 10:1 et 1:10 rapporté aux équivalents d'échange.

3. Procédé selon revendication 1, caractérisé en ce que l'échangeur de cations et l'échangeur d'anions se trouvent dans un lit de mélange.

4. Procédé selon revendication 1, caractérisé en ce que l'échangeur d'anions et l'échangeur de cations se trouvent dans deux filtres différents, traversés successivement par le moyen de régénération.

## Claims

1. Method for partially desalinating water by a combination of weakly acid cation exchanger materials present in aqueous suspensions in the free acid form and basic anion exchanger materials present in the hydrogen carbonate form and subsequently regenerating the charged ion exchanger material, comprising

(a) effecting the partial desalination with a combination or mixture of weakly acid cation exchangers and strongly basic anion exchangers, the $p_K$ being less than 5;

(b) removing from the water non-equivalent amounts of neutral salt cations and anions, depending on the ratios of combination and mixing, respectively, of the two exchanger materials according to (a);

(c) performing the regeneration of both exchanger materials jointly, exclusively by means of $CO_2$ and at a partial pressure above 0.1 bar.

2. Process according to claim 1, wherein the quantity ratio of anion exchanger to cation exchanger is between 10:1 and 1:10, with respect to exchanger equivalents.

3. Process according to claim 1, wherein the cation exchanger and anion exchanger materials are in a mixed bed.

4. Process according to claim 1, wherein the anion exchanger and cation exchanger materials are in two different filters and the regeneration agent is passed in succession through the two filters.

1/5

Fig. 1 a

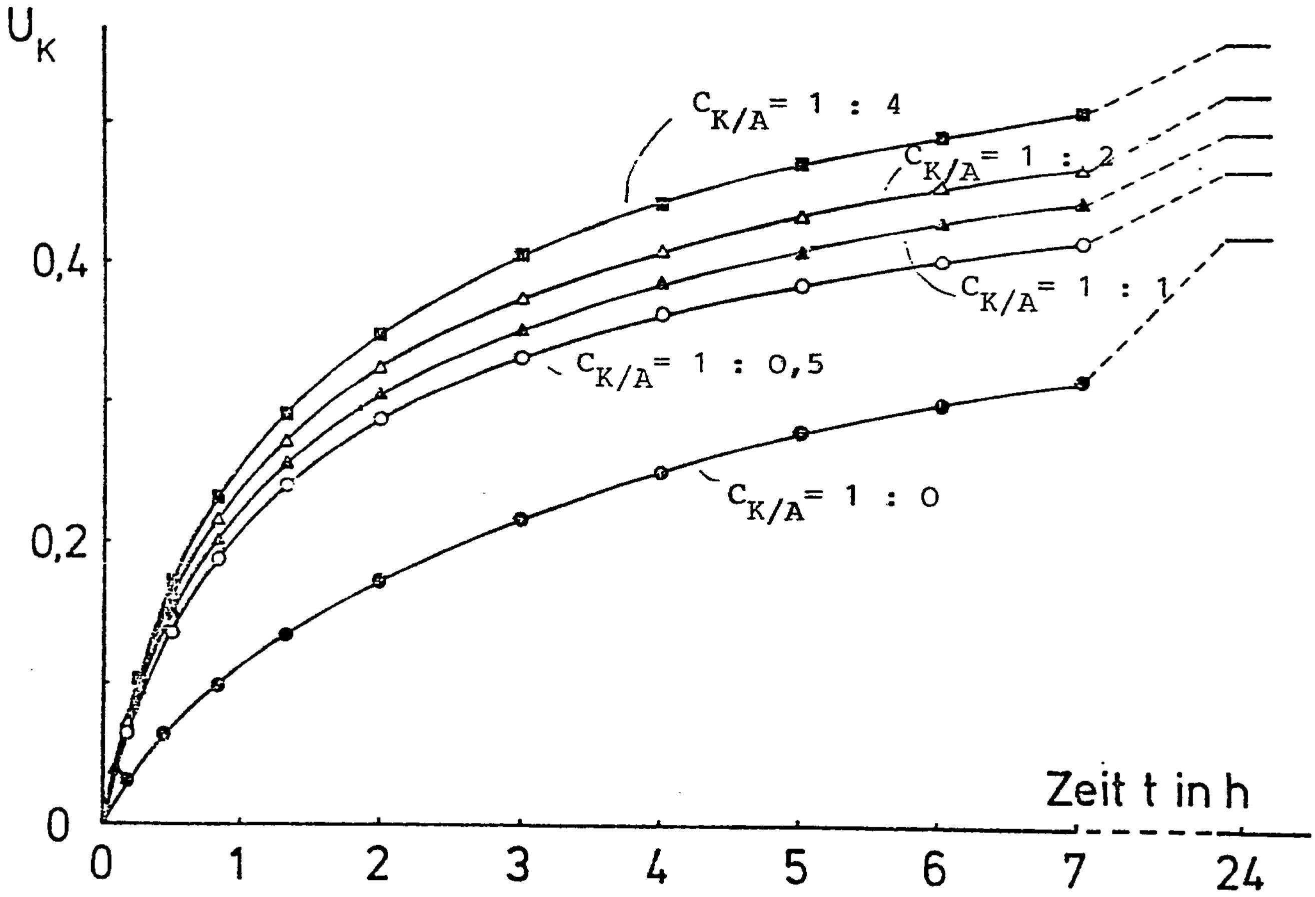
U
K
0,4
0,2
0
$C_{K/A}$= 1 : 4
$C_{K/A}$= 1 : 2
$C_{K/A}$= 1 : 1
$C_{K/A}$= 1 : 0,5
$C_{K/A}$= 1 : 0
Zeit t in h
0 1 2 3 4 5 6 7 24

2/5

Fig.1b

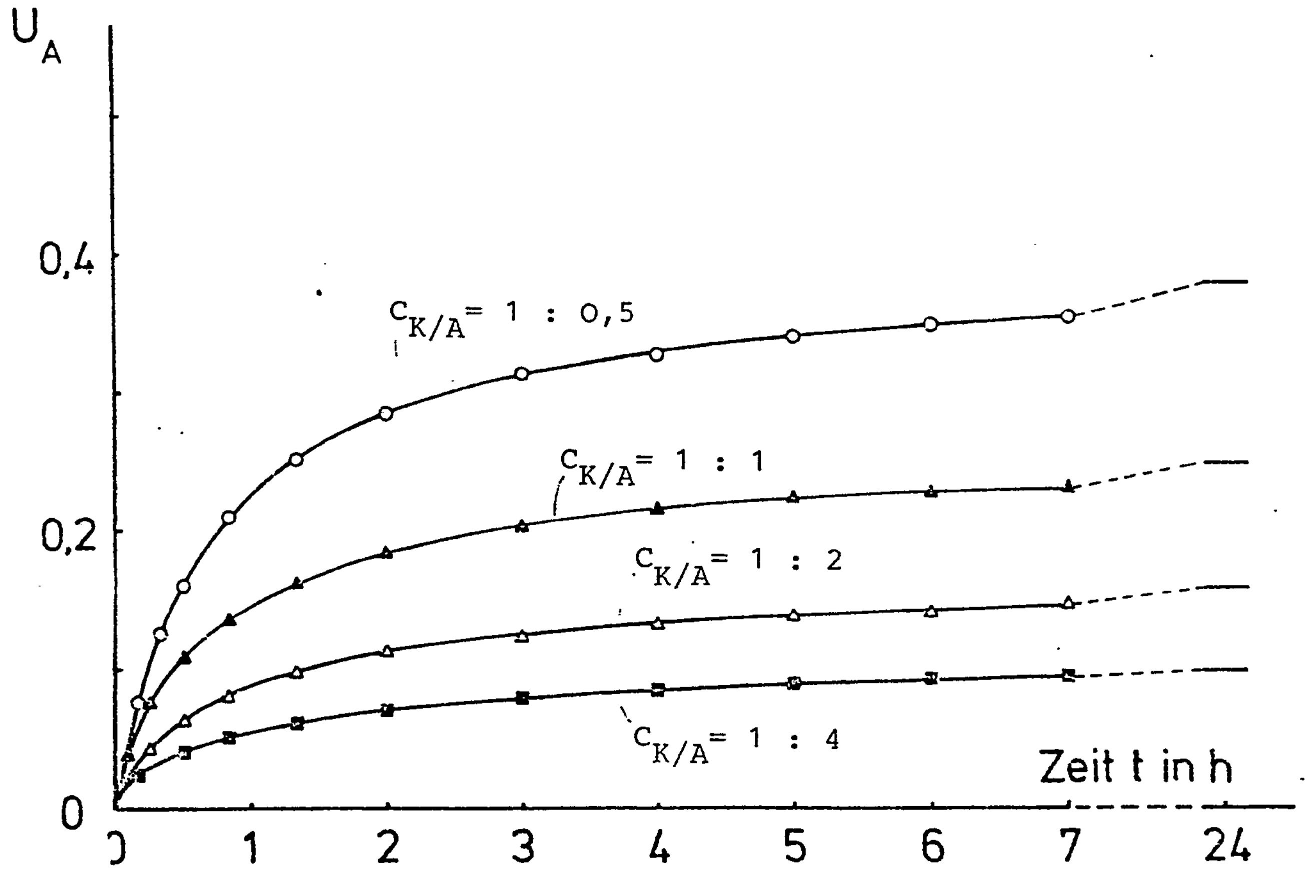

Fig. 2

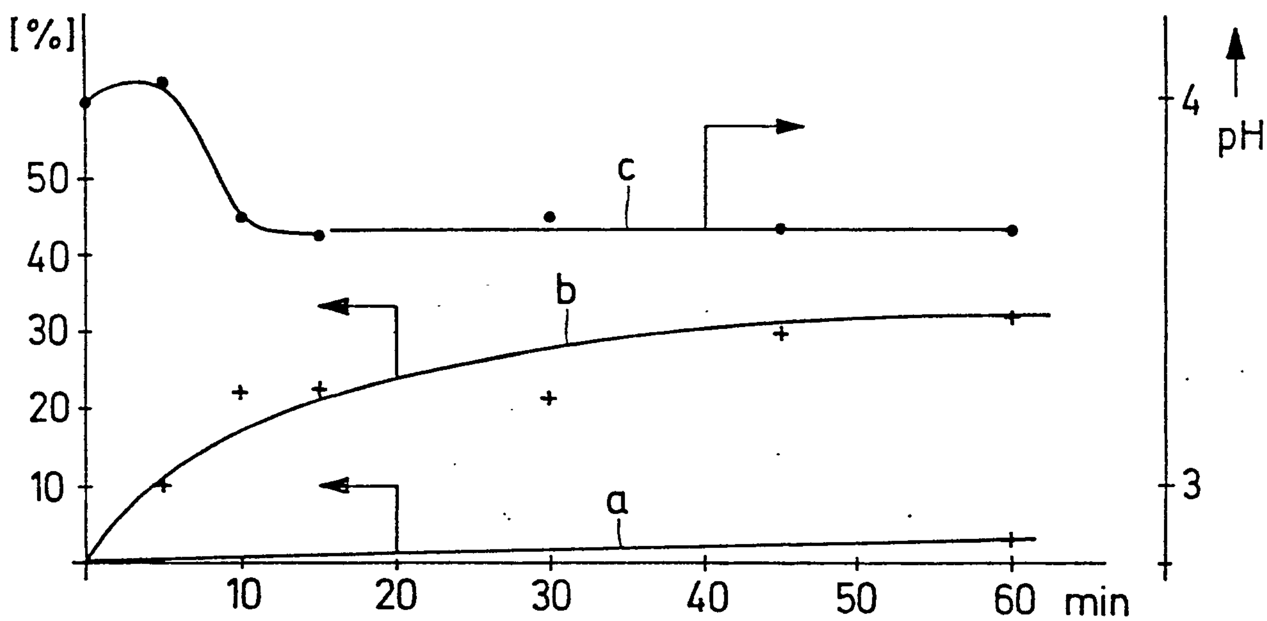

4/5

Fig. 3

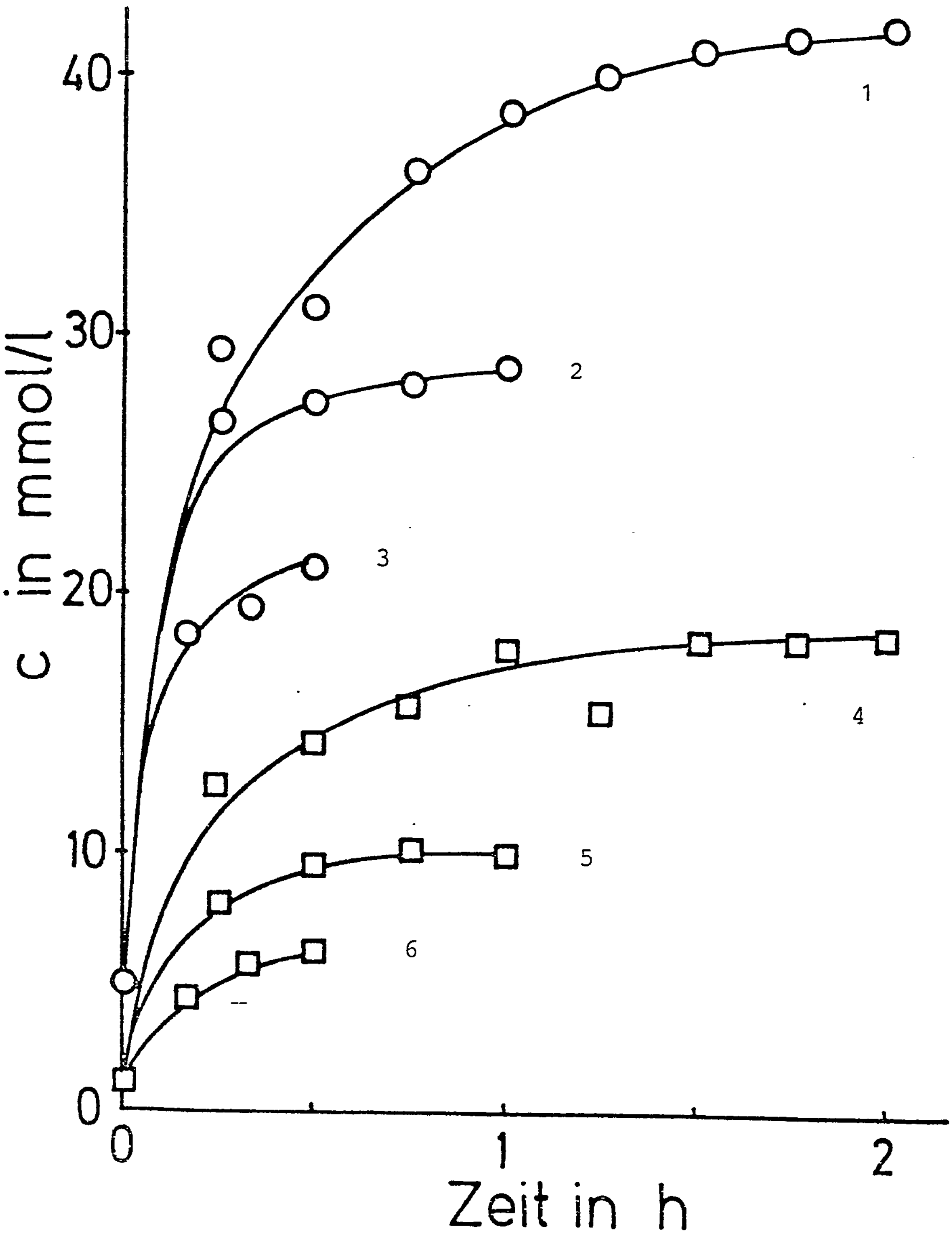

5/5

Fig. 4

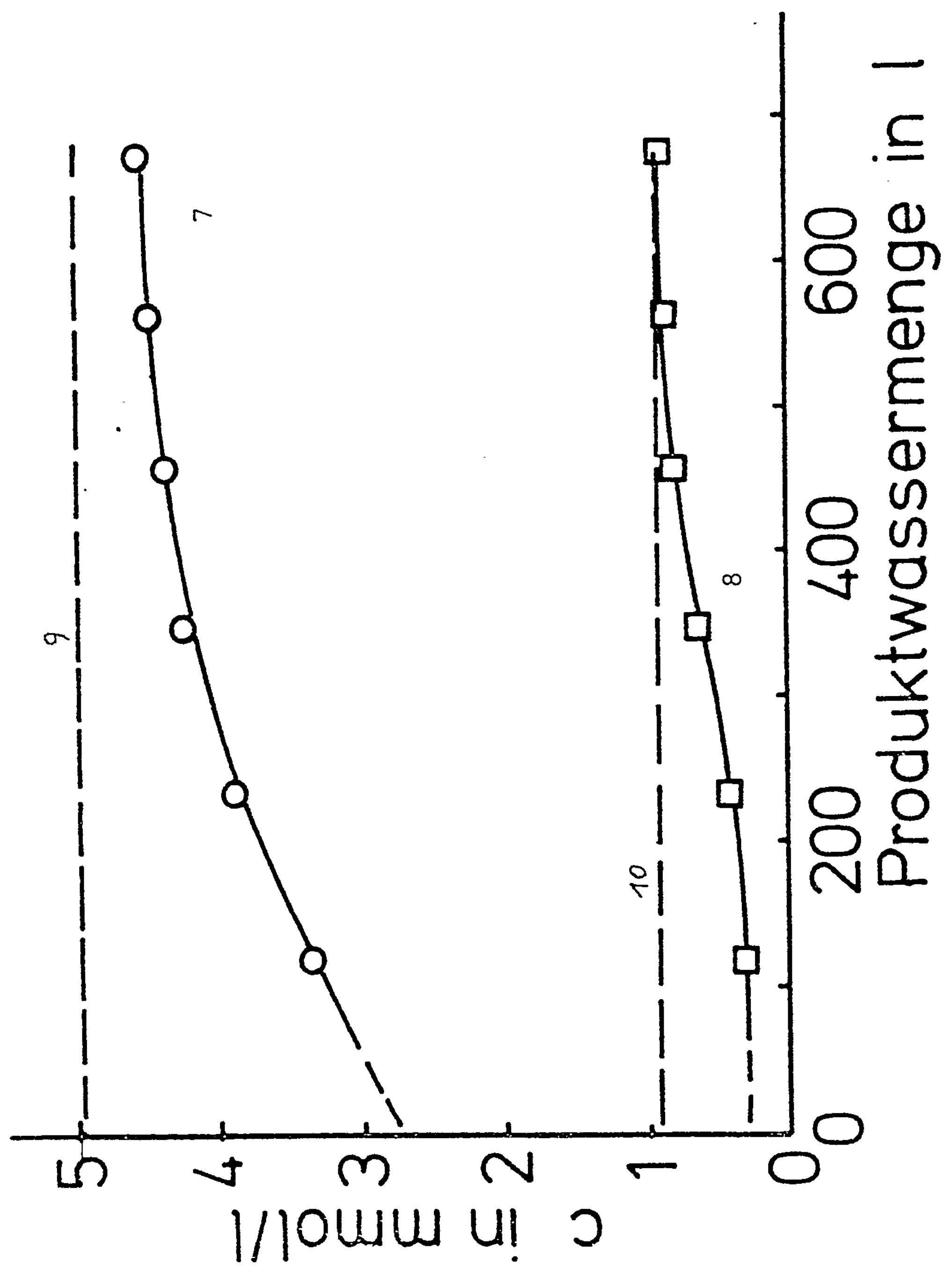

c in mmol/l
0
1
2
3
4
5
Produktwassermenge in l
0
200
400
600
7
8
9
10